# EUROPÄISCHE PATENTSCHRIFT

(11) **EP 1 521 647 B1**
(45) Veröffentlichungstag und Bekanntmachung des Hinweises auf die Patenterteilung: **12.10.2005**
(21) Anmeldenummer: 03763679.2
(22) Anmeldetag: 01.07.2003
(51) Int. Cl.: B21C 35/04, B23D 35/00

(54) **STRANGPRESSE UND STRANGPRESSVERFAHREN**
EXTRUDING PRESS AND EXTRUDING METHOD
PRESSE A FILAGE ET PROCEDE CORRESPONDANT

(30) Priorität: 11.07.2002 DE 10231328
(43) Veröffentlichungstag der Anmeldung: 13.04.2005
(73) Patentinhaber: SMS EUMUCO GmbH, 51377 Leverkusen (DE)
(72) Erfinder: KOST, Karsten, 58313 Herdecke (DE); HEYMANN, Ulrich, 45289 Essen (DE); JESCHKE, Wolfgang, 42369 Wuppertal (DE); KÖDDERMANN, Hans-Otto, 42109 Wuppertal (DE); ÖLKE, Erich, 42553 Velbert (DE)
(74) Vertreter: Valentin, Ekkehard
(86) Internationale Anmeldenummer: PCT/EP2003/006978
(87) Internationale Veröffentlichungsnummer: WO 2004/007107

(56) Entgegenhaltungen:
- EP-A- 1 034 869
- DE-A- 19 951 933
- US-A- 4 793 170
- US-A- 5 832 767
- PATENT ABSTRACTS OF JAPAN vol. 1996, no. 04, 30. April 1996 (1996-04-30) -& JP 07 323329 A (UBE IND LTD), 12. Dezember 1995 (1995-12-12)

## Beschreibung

Die Erfindung betrifft eine Strangpresse, insbesondere für Aluminium oder Aluminiumlegierungen, mit einer Trennvorrichtung gemäß Oberbegriff des Patentanspruches 1 und ein Strangpressverfahren gemäß Oberbegriff des Patentanspruches 7.

Bekannte Strangpressen besitzen eine Trennvorrichtung, die in der Regel einen Zylinder besitzt, welcher an seinem unteren Ende mindestens eine Schneidfläche für den Trennvorgang aufweist. Die Trennvorrichtung wird benötigt, um einerseits den Pressrest von der Matrize abzuscheren oder um andererseits das aus dem Rezipienten herausragende Ende des Bolzens mit einem glatten Trennschnitt zu versehen. Bei bekannten Strangpressen ist die Trennvorrichtung in der Ruhestellung über der Mündung der Matrize oder des Rezipienten angeordnet und kann zur Ausführung des Trennschnitts senkrecht zur Strangpressrichtung an der Mündung vorbei abgesenkt werden. Um mit einer Strangpresse unterschiedliche Profilformen zu erzeugen, werden verschiedene Matrizen verwendet. Auch kann es für einen großen Pressauftrag notwendig sein, eine Matrize durch eine gleichartige neue Matrize zu ersetzen, wenn bei der ursprünglich eingesetzten Matrize Abnutzungserscheinungen auftreten. Obwohl die unterschiedlichen Matrizen in gleicher Weise in dem Matrizenaufnehmer gehaltert werden, kann es in der Praxis auf Grund von Werkzeugtoleranzen doch zu geringfügigen Abweichungen in der jeweiligen Lage der Matrizen kommen. Dies führt dazu, dass die Schnittebene der Trennvorrichtung nicht bündig zu der Frontseite der Matrize verläuft. Befindet sich die voraussichtliche Schnittebene der Trennvorrichtung hinter der Frontseite der Matrize, so kann dies zu Beschädigungen der Schneidflächen der Trennvorrichtung führen, im schlimmsten Fall zu einer Verkeilung der Trennvorrichtung in der Matrize und damit zu einer wesentlichen Störung des Strangpressbetriebes. Ebenso ist es nicht gewünscht, dass die Schnittebene der Trennvorrichtung zu weit vor der Frontseite der Matrize liegt. Dies führt dazu, dass nach dem Trennschnitt ein störender Pressrest an der Matrize verbleibt, der zu Lufteinschluss führen kann.

Um solche Störungen auszuschließen, wird in der deutschen Offenlegungsschrift DE 199 51 933 A1 vorgeschlagen, das Schermesser der Trennvorrichtung so zu lagern, dass stets eine in Richtung Matrize wirkende Anstellkraft wirkt, die das Schermesser bis an die Frontseite der Matrize schwenkt und in dieser Lage hält. Nachteilig bei dieser Vorrichtung ist, dass aufgrund der stets wirkenden Anstellkraft das Schermesser an der Matrize entlang schleift und auf diese Weise stark verschleißt.

Des Weiteren hat sich bei den meisten bekannten Trennvorrichtungen als Nachteil herausgestellt, dass der Pressrest, bevor der Trennschnitt beendet ist, abreißt und auf diese Weise keine saubere, glatte Trennfläche erreicht wird. In solchen Fällen kann der nächste Bolzen, der gepresst werden soll, keine glatte Anlage finden. Es kommt zu Einschlüssen von Luft oder sogar Verunreinigungen, die sich dann im Strangpressprofil wiederfinden. Derartige Strangpressprofilabschnitte sind als Abfall aus dem entstehenden Strang herauszuschneiden.

Ziel der Erfindung ist es, eine Strangpresse mit einer Trennvorrichtung zur Verfügung zu stellen und ein Strangpressverfahren zu entwickeln, um eine saubere Querpressnaht zu erhalten.

Diese Aufgabe wird durch die Merkmale des Anspruchs 1 und 7 gelöst. Die saubere Querpressnaht wird insbesondere durch ein schlankes Messer erzielt, welches zwei Schneidflächen aufweist, die sich in einer Schneidspitze berühren und die zwischen sich einen spitzen Winkel kleiner als 45° einschließen. Vorzugsweise schließen die beiden Schneidflächen einen Winkel von 20° ein. Durch ein solches schlankes Messer kann der gesamte Pressrest sauber von der Matrize abgeschert werden, ohne dass im unteren Durchmesserbereich ein Abreißen des Pressrestes erfolgt. Es wird also eine saubere, glatte Trennschnittfläche und glatte Anlage ohne Einschlüsse am nachfolgenden Bolzen erzielt.

Schlanke Messer haben jedoch den Nachteil, dass sie schneller verschleißen. Um dies zu verhindern, wird erfindungsgemäß die Schere gut positioniert und zwar möglichst so, dass sie nicht am harten Stahlmaterial der Matrize entlang schleift. Zur Abtrennung des Pressrestes von der Matrize werden die Schneidwerkzeuge vor dem ersten Trennschnitt so positioniert, dass der Abstand der Schneidspitze von der Frontseite der Matrize minimal ist. Auf diese Weise wird ein mit der Frontfläche der Matrize bündiger Trennschnitt erzielt. Zur Einstellung des Abstandes der Schneidspitze von der Frontfläche der Matrize kann der Zylinder der Trennvorrichtung um eine drehbare Lagerung geschwenkt werden. Damit werden unterschiedliche Anstellwinkel des Messers zur Matrize realisiert. Definiert man den Anstellwinkel als den Winkel zwischen der beabsichtigten Trennschnittfläche - also eine Fläche die bündig zur Frontseite der Matrize ist - und der dieser Trennschnittfläche zugewandten Schneidfläche der Trennvorrichtung, so ist dieser Anstellwinkel sehr klein, wenn die Matrize eine Lage aufweist, bei der die neu eingesetzte Matrize abweichend von der normalen Lage einer Matrize mit ihrer Frontseite weiter aus der Matrizenhalterung herausragt. Weicht dagegen die Lage der Matrize derart ab, dass die Frontseite gegenüber der normalen Lage zurückversetzt ist, so ergibt sich ein größerer Anstellwinkel.

Der in der Ruhestellung über der Mündung der Matrize angeordnete und senkrecht zur Strangpressrichtung ausgerichtete Zylinder wird zur Einstellung des Anstellwinkels, d.h. zur Positionierung der Schneidspitze vorzugsweise an der Frontseite der Matrize, mit seinem unterem Ende in Richtung Matrize verschwenkt. Um einen mit der Frontfläche der Matrize bündigen Trennschnitt beim Abtrennen des Pressrestes zu erzielen, wird die Schneidspitze soweit verschwenkt, bis sie die Frontseite der Matrize berührt. Diese für die eingesetzte Matrize optimale Stellung des Zylinders und damit optimale Position der Trennschnittflächen und der Schneidspitze soll bei jedem folgenden Trennschnitt zur Abtrennung des Pressrestes von der Matrize wieder erreicht werden. Um diese gewünschte Position nicht vor jedem Trennschnitt erneut einstellen zu müssen, wird die gewünschte Position abgespeichert. Dies kann auf mechanischem, hydraulischem oder elektronischem Wege vorgenommen werden. Dazu steht eine starre mit dem Zylinder verbundene Führung mit entsprechenden mechanischen, hydraulischen oder elektronischen Komponenten in Wirkverbindung. Eine verschwenkte Position des Zylinders kann über die Führung an diese Komponenten übertragen werden. Befindet sich beispielsweise der Zylinder in abgesenkter und ausgeschwenkter Position, d.h. die Schneidspitze berührt die Frontseite der Matrize, kann gleichzeitig mit dieser Bewegung oder aber nach Erreichen der Position ein Anschlag mechanisch, elektrisch oder hydraulisch verfahren und festgelegt werden, der garantiert, dass bei jeder folgenden Ausschwenkbewegung zur Einstellung des Anstellwinkels genau diese gleiche Schwenklage des Zylinders wieder erreicht wird.

Besonders vorteilhaft ist es den Zylinder beim Rückhub nach dem Trennschnitt von der Frontseite der Matrize abzuschwenken, so dass beim Rückhub kein Kontakt der Trennvorrichtung mit der Matrize vorliegt und somit kein Verschleiß der Schneidwerkzeuge stattfinden sowie kein Aluminium beim Rückhub ansetzen kann. Nach dem Rückhub befindet sich die Trennvorrichtung wieder oberhalb der Mündung der Matrize und es erfolgt ein erneuter Pressvorgang. Sobald ein neuer Bolzen zu einem Strangpressprofil verpresst ist, wird die Trennvorrichtung wieder in den voreingestellten Anstellwinkel verschwenkt und nach unten verfahren, um den Pressrest von der Matrize zu entfernen. Nach dem Abschwenken der Trennvorrichtung und dem Rückhub erfolgt dann der nächste Pressschritt. Dieser Vorgang wird solange wiederholt, bis eine neue Matrize benötigt wird, beispielsweise um eine neue Profilform zu pressen.

Die Trennvorrichtung zur Abtrennung des Pressrestes kann am Gegenholm oder am Blockaufnehmerhalter angeordnet sein. Es ist eine Anwendung der Erfindung sowohl für Direkt- oder auch Indirekt-Strangpressen möglich.

Des Weiteren kann diese Trennvorrichtung auch zur Abtrennung der Bolzenstirnfläche eines aus dem Rezipienten einer Strangpresse herausragenden Metallbolzens benutzt werden, um vor der Verpressung des Metallbolzens eine glatte Bolzenstirnfläche zu erzielen und evtl. anhaftende Oxidpartikel oder Schmierstoffreste zu entfernen. In diesem Fall ist es möglich, den Abstand der Schneidspitze von der Frontseite des Rezipienten in gewünschter Weise einzustellen.

In bevorzugter Weise wird die erfindungsgemäße Strangpresse mit der oben beschriebenen Trennvorrichtung für das Strangpressen von Aluminium oder Aluminiumlegierungen eingesetzt.

Weitere Einzelheiten und Vorteile der Erfindung ergeben sich aus den Unteransprüchen und der nachfolgenden Beschreibung, in der ein Ausführungsbeispiel der Erfindung für eine Direkt-Strangpresse aufgezeigt wird. Die Erfindung ist jedoch nicht auf diese Ausführungsform beschränkt. Es zeigen:
- Fig. 1: eine Prinzipskizze einer erfindungsgemäßen Strangpresse mit Trennvorrichtung in Ruhestellung und
- Fig. 2: eine Prinzipskizze der in Fig. 1 gezeigten Strangpresse mit Trennvorrichtung unmittelbar vor Ausführung des Trennschnitts.

Die zum Strangpressen, insbesondere von Aluminium und Aluminiumlegierungen verwendeten Direkt-Strangpressen weisen einen längsverschieblichen Rezipienten auf, in dem man zu Beginn des Strangpressens den Pressbolzen anordnet. Dieser Pressbolzen wird mittels eines Stempels durch eine Matrize gedrückt. Diese Matrize wird von einem Matrizenaufnehmer gehalten und ist zwecks Wartung oder Ersatz aus der Matrizenaufnahme herausführbar. Am Ende des Strangpressvorgangs, wenn der gesamte ausnutzbare Teil des Aluminiumbolzens vom Stempel durch die Matrize gedrückt ist, um das Strangpressprofil zu bilden, verbleibt ein Pressrest in Strangpressrichtung vor der Matrize, den man vor der Fortsetzung des Strangpressvorgangs von der Matrize abtrennen muss.

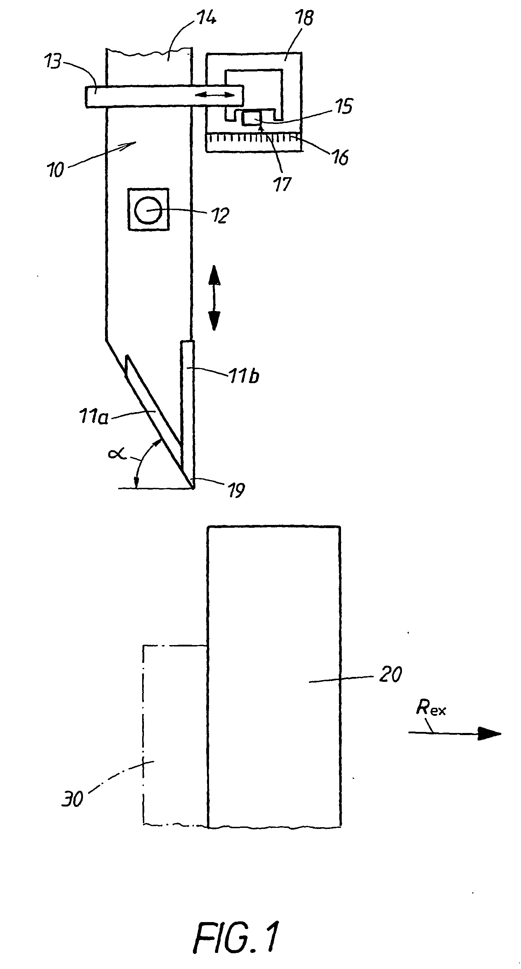

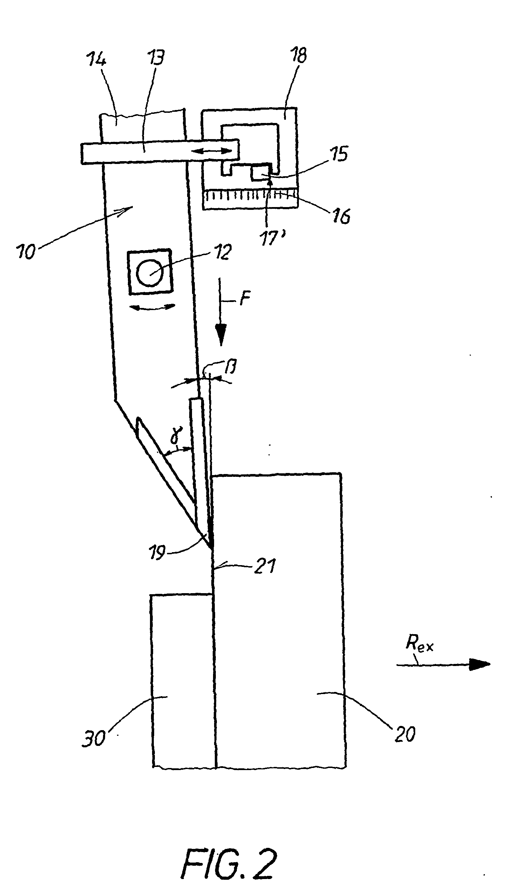

In den Fig. 1 und 2 sind nicht alle Teile der Strangpresse aufgezeigt. Zur Beschreibung des Erfindungsgegenstandes sind diese Prinzipskizzen gem. Fig. 1 und Fig. 2, die die Matrize 20 und einen Teil der Trennvorrichtung 10 darstellen, jedoch ausreichend.

Die Trennvorrichtung 10 befindet sich in der in Fig. 1 gezeigten Darstellung in ihrer Ruheposition oberhalb der Matrize 20. Die Trennvorrichtung 10 kann aus dieser Ruheposition durch eine senkrecht zur Strangpressrichtung (Rₑₓ) ausgerichteten Bewegung abgesenkt und durch einen Rückhub angehoben werden. Diese Bewegung ist durch den angezeigten Doppelpfeil angedeutet. Zur Ausführung der senkrechten Verschiebebewegung der Trennvorrichtung 10 und zur Übertragung der Schneidkraft F sind an der Trennvorrichtung 10 entsprechende Antriebsmittel angeordnet, die hier nicht dargestellt sind.

Die Trennvorrichtung 10 dient zur Abtrennung des Pressrestes 30 von der Matrize 20 bzw. der Abtrennung der Bolzenstirnfläche eines aus dem Rezipienten einer Strangpresse herausragenden Metallbolzens. Der Pressrest 30 ist ein Teil des Bolzens, der zum Schluss eines Strangpressschrittes und nach Rücklauf des Rezipienten von der Matrize 20 abgetrennt werden kann. In der Fig. 1 ist angedeutet, wo sich der Pressrest 30 nach dem Pressschritt befindet. Das nicht gezeigte Strangpressprofil ragt in Strangpressrichtung Rₑₓ auf der anderen Seite aus der Matrize 20 heraus. Für unterschiedliche Profilformen werden unterschiedliche Werkzeuge - sprich Matrizen 20 - eingesetzt und auch bei Abnutzungserscheinungen an der eingesetzten Matrize ist eine Unterbrechung des Strangpressverfahrens für einen Werkzeugwechsel notwendig. Eine neu eingesetzte Matrize 20 wird in den Matrizenaufnehmer (nicht gezeigt) eingeführt und gehaltert. Vergleicht man nun die Lage der neu eingesetzten Matrize 20 mit der Lage der zuvor eingesetzten Matrize, so kann sich in der Praxis eine Abweichung ergeben. Für die Abtrennung des Pressrestes 30 ist eine in Strangpressrichtung versetzte Lage bzw. eine in entgegengesetzte Richtung versetzte Lage von Nachteil. Im ersten Fall, d.h. die Matrize 20 besitzt eine in Strangpressrichtung versetzte Lage würde eine senkrechte Bewegung der Trennvorrichtung 10 zwar zur Abtrennung eines Pressrestes führen, es würde aber ein Restteil des Pressrestes an der Matrize 20 verbleiben. Dies führt zu Störungen bei dem folgenden Pressschritt, wenn nämlich der Rezipient wieder an die Matrize 20 herangefahren wird, kann sich dieser Restteil des Pressrestes 30 zwischen Rezipient und Matrize 20 verquetschen.

In dem Fall, wo die neu eingesetzte Matrize 20 eine in Richtung Rezipient versetzte abweichende Position zu der vorher eingesetzten Matrize besitzt, setzt die Trennvorrichtung 10 bei ihrer senkrechten Bewegung auf die Matrize 20 auf bzw. schleift an der Frontseite 21 der Matrize 20 entlang. Dies ist unerwünscht, da es zur Zerstörung oder zum starken Verschleiß der am unteren Ende der Trennvorrichtung 10 angeordneten Schneidflächen 11a, 11b sowie der Matrize 20 führen kann.

Nach einem Werkzeugswechsel, d.h. nach einem Einsetzten einer neuen Matrize 20 wird daher die Trennvorrichtung 10 neu ausgerichtet. Eine solche Neuausrichtung der Trennvorrichtung 10 ist in der Fig. 2 gezeigt. Der Zylinder 14 der Trennvorrichtung 10 ist drehbar gelagert. Das Lager 12 ermöglicht somit ein Verschwenken des unteren Endes des Zylinders 14 in Richtung Matrize 20. Um den Pressrest 30 möglichst vollständig von der Matrize 20 abzutrennen, ist ein mit der Frontseite 21 der Matrize 20 bündiger Trennschnitt erwünscht. Aus diesem Grund wird der Zylinder 14 der Trennvorrichtung 10 so weit ausgeschwenkt, bis die Schneidspitze 19 die Frontseite 21 der Matrize 20 berührt. Wird die Trennvorrichtung 10 in dieser Position abgesenkt, um den Trennschnitt zu vollziehen, wird von der Schneidspitze 19 und anschließend von den Schneidflächen 11a, 11b eine Schneidkraft F auf den Pressrest 30 ausgeübt, wobei sich der Pressrest 30 in einem sauberen, glatten Trennschnitt von der Matrize 20 löst.

Bei bekannten Trennvorrichtungen kann der Pressrest 30 vor Beendigung des Trennschnitts abreißen. In dem Abreißbereich ist die Querschnittsfläche nicht glatt und es ist damit keine glatte Anlagefläche zum nächsten Bolzen garantiert. Um einen sauberen, glatten Trennschnitt über den gesamten Querschnitt des Pressrestes zu erzielen und damit Lufteinschlüsse zu vermeiden, wird erfindungsgemäß die Trennvorrichtung 10 mit zwei v-förmig zueinander angeordneten Schneidflächen 11a, 11b ausgerüstet, die sich in der Schneidspitze 19 berühren. Die Schneidflächen 11a, 11b schließen zwischen sich einen spitzen Winkel γ ein. Dieser Winkel γ ist kleiner 45°, vorzugsweise 20°. In den Figuren ist eine Ausführungsform gezeigt, bei der eine Schneidfläche 11b nahezu parallel zur Frontseite 21 der Matrize 20 ausgerichtet ist, d.h. nahezu parallel zur Wirkung der Schneidkraft F. Diese Schneidfläche 11b ist als Verlängerung am unteren Ende des Zylinders 14 angeordnet und in Längsausrichtung dieses Zylinders 14 angebracht. Die zweite Schneidfläche 11a ist in einem Winkel α zur Extrusionsrichtung Rₑₓ bzw. zur Längsausrichtung des Bolzens und damit des Pressrestes 30 vorgesehen. Die Schneidflächen 11a, 11b sind auswechselbar an der Trennvorrichtung festgelegt, was in den Fig. nicht gezeigt wird. Die beschriebene Anordnung der Schneidflächen 11a, 11b ist eine bevorzugte Ausführungsform. Es sind jedoch auch andere Ausführungsformen denkbar. Wesentlich zur Erzielung eines glatten Trennschnitts ist die Anordnung der Schneidflächen 11a, 11b zueinander, nämlich der spitze Winkel γ.

Betrachtet man nun die Trennvorrichtung 10 in der ausgeschwenkten Lage des Zylinders 14 in der sich die Schneidspitze 19 in Kontakt mit der Frontseite 21 der Matrize 20 befindet, in Fig. 2 dargestellt, ergibt sich zwischen der der Matrize 20 zugerichteten Schneidfläche 11b und der beabsichtigen Trennschnittfläche ein Anstellwinkel β. Dieser Anstellwinkel β ist ebenso wie eine an der Lagerung 12 messbare Auslenkung ein Maß für die Position, die die Trennvorrichtung 10 für den gewünschten Trennschnitt in den folgenden Pressschritten einnehmen sollte. Um zwischen den einzelnen Pressschritten die Nebenzeiten möglichst gering zu halten, ist es wichtig, dass diese vorgenannte Position abgespeichert wird, damit die Trennvorrichtung 10 ohne Einstellzeiten direkt aus ihrer Ruheposition oberhalb der Matritze 20 in dieser angehobenen Position in die abgespeicherte Position ausschwenkt und wie bei bekannten Verfahren ohne Zeitverlust der Trennschnitt vorgenommen werden kann.

Um die Schneidflächen 11a, 11b und die Schneidspitze 19 vor unnötigen Verschleiß zu bewahren, wird beim Rückhub der Trennvorrichtung 10 der Zylinder 14 in die entgegengesetzte Richtung verschwenkt und das untere Ende des Zylinders 14 von der Frontseite 21 der Matrize 20 abgehoben. Befindet sich die Trennvorrichtung 10 wieder in der angehobenen Stellung kann in der Zeit, wo der nächste Pressschritt vorgenommen wird, die Vorrichtung wieder in die abgespeicherte Position verschwenkt werden, um den nächsten Trennzyklus vorzubereiten.

Zur Abspeicherung der für den gewünschten Trennschnitt notwendigen Position, wo die Trennvorrichtung 10 sich im Anstellwinkel β befindet, sind verschiedene Ausführungsformen möglich. Da diese Position sowohl durch den Anstellwinkel β als auch durch eine Auslenkung um die Lagerung 12 und des weiteren durch eine Längsverschiebung einer starr mit der Trennvorrichtung 10 verbundenen Führung 18 charakterisiert ist. Es hat sich gezeigt, das eine Abspeicherung einer ausgeschwenkten Position des Zylinders 14 der Trennvorrichtung 10 in einfacher Weise möglich ist, indem die beim Ausschwenken des Zylinders 14 sich verändernde Lage der Führung 18 im Bezug zu einem festen Anschlag 15 genutzt wird. In den Fig. 1 und 2 ist eine Möglichkeit der Anordnung eines solchen Anschlags 15 gezeigt. Dieser Anschlag 15 greift in eine Ausnehmung der Führung 18. In der Fig. 1 befindet sich der Zylinder 14 der Trennvorrichtung in einer nicht ausgeschwenkten Lage, d.h. senkrecht zur Strangpressrichtung Rₑₓ. Der Zylinder 14 ist über eine Halterung 13 starr mit der Führung 18 verbunden. Der Anschlag 15, der in eine Ausnehmung der Führung 18 eingreift, zeigt die Position 17 auf einer möglichen an der Führung 18 angeordneten Einstellskala 16. Schwenkt nun der Zylinder 14 um das Lager 12 in den Anstellwinkel β, bewegt sich also die Schneidspitze 19 in Richtung Matrize 20, wie dies in Fig. 2 gezeigt ist, so schwenkt der Teil des Zylinders 14 der oberhalb der Lagerung 12 angeordnet ist, in die entgegengesetzte Richtung. In gleicher Richtung wird die Führung 18 durch die starre Verbindung über die Halterung 13 verschoben. Der in die Ausnehmung an der Führung 18 eingreifende Anschlag 15 ist jedoch nicht mit der Führung 18 verbunden. Dieser Anschlag 15 verändert seine Lage nicht. Im Bezug auf die Führung 18 verändert sich jedoch seine Position auf der an der Führung 18 angeordneten Einstellskala 16. Die nunmehr angezeigte Position 17' entspricht also der gewünschten ausgeschwenkten Position des Zylinders 14 der Trennvorrichtung 10. Wird nach dem Rückhub der Trennvorrichtung 10 der Zylinder 14 so weit ausgeschwenkt bis in der Führung 18 der Anschlag 15 die Position 17' erzielt, ist in jedem Fall gewährleistet, dass die Trennvorrichtung 10 mit einem Anstellwinkel β die Abtrennung des Pressrestes 30 vornehmen wird. Es ist auch möglich, dass der Anschlag 15 in seiner Lage nicht festgelegt ist, sich beim Ausschwenken des Zylinders 14 zusammen mit der Führung 18 in einen neue Lage bewegt. In diesem Fall wird nach der gefundenen und gewünschten Position für die Trennvorrichtung 10 im Anstellwinkel β der Anschlag unabhängig von der Führung 18 festgelegt. Dies kann so erfolgen, dass der Anschlag 15 in dieser Position die Längsbewegung der Führung einschränkt und damit den Maximalwert für die Auslenkung um die Lagerung 12 und den Maximalwert für den Anstellwinkel β angibt. Vor der Ausführung eines Trennschnitts wird dann die Trennvorrichtung 10 bis zu dieser maximalen Auslenkung ausgeschwenkt.

Die Position der Führung 18 kann selbstverständlich auch auf andere Art und Weise gemessen und abgespeichert werden. Es ist beispielsweise auch möglich, das der Druckzylinder, welcher die Schwenkbewegung des Zylinders 14 verursacht, mit der Führung 18 in Wirkverbindung tritt. Eine weitere Möglichkeit der Abspeicherung der gewünschten Position 17' besteht darin, ein Differential-Proportionalventil zu verwenden, dass gleichzeitig oder nach dem Verschwenken der Trennvorrichtung 10 betätigt wird und ein von der entsprechenden Position 17' abhängiges Ausgangssignal an eine speicherprogrammierbare Steuerung (SPS) weiterleitet, durch die dieses Signal und damit die Position 17' abrufbar abgespeichert wird.

Desweiteren ist es möglich, die Position 17' der Schneidspitze 19, den Anstellwinkel β, die Auslenkung des Zylinders 14 oder die Längsverschiebung der Führung 18 elektronisch oder optisch zu messen und diese Signale ebenfalls an eine speicherprogrammierbare Steuerung (SPS) weiterzugeben, von der die Position 17' reproduzierbar abgerufen werden kann.

Mit einer solchen erfindungsgemäßen Strangpresse ist ein verbessertes Strangpressverfahren möglich, da in jedem Fall ein sauberer und bündig zur Frontseite 21 der Matrize 20 vorgenommener Trennschnitt möglich ist. Es kommt also beim Abtrennen des Pressrestes 30 aufgrund der matrizen- abhängigen Position 17' der Trennvorrichtung 10 zu keinen Störungen. Aufgrund des zurückgeschwenkten Zylinders 14 beim Rückhub der Trennvorrichtung 10 wird auch der Verschleiß der Schneidflächen 11a, 11b wesentlich verringert. Bei dem erfindungsgemäßen Strangpressverfahren werden ebenfalls in mehreren nacheinander ablaufenden Pressschritten je ein Metallbolzen, insbesondere aus Aluminium oder einer Aluminiumlegierung, zur Formung eines Metallprofilstrangs, insbesondere eines Aluminiumprofilstrangs, durch die Matrize 20 gedrückt und das Ende des jeweiligen Metallbolzens als Pressrest 30 mittels der Trennvorrichtung 10, die senkrecht zur Strangpressrichtung Rₑₓ eine Schneidkraft F ausübt, von der Matrize 20 abgetrennt, bevor der nächste Pressschritt mit einem weiteren Metallbolzen beginnt. Wie bereits oben beschrieben, wird vor dem ersten Pressschritt oder nach einem Wechsel der Matrize 20 eine matrizen- abhängige Position 17' der Schneidwerkzeuge, insbesondere der Schneidflächen 11a, 11b und der Schneidspitze 19, der Trennvorrichtung 10 eingestellt. Diese Position 17' wird dann vor jedem Trennschnitt reproduzierbar angefahren und in dieser Position 17' wird der Trennschnitt vorgenommen. Sobald der Pressrest 30 von der Matrize 20 abgetrennt ist, wird die Trennvorrichtung 10 von der Frontseite 21 der Matrize 20 abgeschwenkt und damit die Position 17' aufgegeben. Der Rückhub erfolgt in einer beliebigen, von der Matrize 20 abgeschwenkten Position 17 der Trennvorrichtung 10.

In der Ausführungsform, die in den Fig. 1 und 2 dargestellt ist und oben beschrieben wurde, ist die Anwendung der mechanisch verfahrbaren Trennvorrichtung 10 zur Abtrennung des Pressrestes 30 von der Frontseite 21 der Matrize 20 einer Direkt-Sprangpresse beschrieben. In gleicher Weise lässt sich eine Trennvorrichtung 10 bei einer Indirekt-Strangpresse positionieren. Des Weiteren lässt sich die Trennvorrichtung 10 auch zur Abtrennung der Bolzenstirnfläche eines aus des Rezipienten einer Strangpresse herausragendem Metallbolzens vor seiner Verpressung verwenden. Es ist selbstverständlich, dass die im Ausführungsbeispiel beschriebene, mechanisch ausgeführte Bewegung der Trennvorrichtung 10 mit Hilfe von hydraulischen, elektrischen, elektromagnetischen oder anderen Kräften bewirkt werden kann, auch eine Kombination derartiger Komponenten ist denkbar.

### Bezugszeichenliste:

- 10: Trennvorrichtung
- 11a: Schneidfläche
- 11b: Schneidfläche
- 12: Lagerung
- 13: starre Verbindung, Halterung
- 14: Zylinder
- 15: Anschlag
- 16: Einstellskala
- 17,17': Position
- 18: Führung
- 19: Schneidspitze
- 20: Matrize
- 21: Frontseite
- 30: Preßrest

- α: Winkel zwischen 11 und Rₑₓ
- β: Anstellwinkel
- γ: Winkel zwischen 11a und 11b
- F: Schneidkraft
- Rₑₓ: Strangpressrichtung

## Patentansprüche

1. Strangpresse, insbesondere für Aluminium oder Aluminiumlegierungen, mit einer Trennvorrichtung (10),
wobei die Trennvorrichtung (10) einen schwenkbaren Zylinder (14) besitzt, welcher an seinem unteren Ende zwei V-förmig zueinander ange ordnete Schneidflächen (11) aufweist, die sich in einer Schneidspitze (19) berühren, und die zwischen sich einen spitzen Winkel (γ) kleiner 45° einschliessen, und
der Zylinder (14) in der Ruhestellung über der Mündung einer Matrize (20) oder eines Rezipienten angeordnet sowie zur Ausführung eines Trennschnittes senkrecht zur Strangpressrichtung (Rₑₓ) an der Mündung vorbei absenkbar ist,
**dadurch gekennzeichnet, dass**
ein für einen Trennschnitt gewünschter Abstand der Schneidspitze (19) zur Frontseite (21) der Matrize (20) oder des Rezipienten voreinstellbar ist,
dieser eingestellte Abstand, der einem bestimmten Anstellwinkel β des Zylinders (14) entspricht, abspeicherbar ist,
zur Ausführung eines Trennschnittes der Zylinder (14) reproduzierbar in diesen voreingestellten Anstellwinkel β verschwenkbar ist und in diesem voreingestellten Anstellwinkel β mit einer Schneidkraft F in senkrechter Richtung nach unten verfahrbar ist und
die Schneidflächen (11) der Trennvorrichtung (10) vor dem senkrechten Rückhub abschwenkbar sind.

2. Strangpresse gemäß Anspruch 1, **dadurch gekennzeichnet, dass** der Winkel (γ) vorzugsweise 20° beträgt.

3. Strangpresse nach Anspruch 1 oder 2, **dadurch gekennzeichnet, dass** zur Erzielung eines mit der Frontfläche (21) der Matrize (20) bündigen Trennschnittes beim Abtrennung des Pressrestes (30) von der Matrize (20) der Abstand der Schneidspitze (19) von der Frontseite (21) der Matrize (20) minimal ist.

4. Strangpresse nach mindestens einem der Ansprüche 1 bis 3, **dadurch gekennzeichnet, dass** zur Einstellung des Abstandes der Schneidspitze (19) der Zylinder (14) mittels einer starr (13) mit dem Zylinder (14) verbundenen Führung (18) um eine drehbare Lagerung (12) bis zu einem gewünschten Anstellwinkel (β) schwenkbar ist, wobei der Anstellwinkel (β) der Winkel zwischen der beabsichtigten Trennschnittfläche und der der Trennschnittfläche zugewandten Schneidfläche (11) der Trennvorrichtung (10) ist.

5. Strangpresse nach Anspruch 4, **dadurch gekennzeichnet, dass** die starr (13) mit dem schwenkbaren Zylinder (14) verbundene Führung (18) unmittelbar oder mittelbar mit mechanischen oder hydraulischen oder elektronischen Komponenten in Wirkverbindung steht, wobei diese Komponenten dem gewünschten Anstellwinkel (β) entsprechend einstellbar sind und diese Einstellung zu einem späteren Zeitpunkt, wenn der gewünschte Anstellwinkel (β) für den Trennschnitt benötigt wird, wiederholt abrufbar ist.

6. Strangpresse nach Anspruch 5, **dadurch gekennzeichnet, dass** für den Rückhub der Trennvorrichtung (10) nach dem Trennschnitt die Schneidspitze (19) von der Frontseite (21) der Matrize (20) abhebbar ist, wobei sich die Einstellung der Komponenten nicht ändert.

7. Strangpressverfahren, bei welchem in mehreren nacheinander ablaufenden Pressschritten je ein Metallbolzen, insbesondere ein Bolzen aus Aluminium oder einer Aluminiumlegierung, zur Formung eines Metallprofilstrang durch eine Matrize (20) gedrückt wird und das Ende des jeweiligen Metallbolzens als Pressrest (30) mittels einer Trennvorrichtung (10), die senkrecht zur Strangpressrichtung (Rₑₓ) eine Schneidkraft (F) ausübt, von der Matrize (20) abgetrennt wird, bevor der nächste Pressschritt mit einem weiteren Metallbolzen beginnt,
**dadurch gekennzeichnet, dass**
vor dem ersten Pressschritt oder nach einem Matrizenaustausch eine matrizenabhängige Position (17') der Schneidwerkzeuge der Trennvorrichtung (10) eingestellt und anschliessend abgespeichert wird, diese Position (17') vor jedem Trennschritt reproduzierbar angefahren wird,
in dieser Position (17') der senkrechte Trennschnitt vorgenommen wird,
vor dem senkrechten Rückhub der Trennvorrichtung (10) durch ein Abschwenken der Schneidwerkzeuge der Trennvorrichtung (10) von der Matrize (20) diese Position (17') freigegeben wird und
der Rückhub in einer beliebigen abgeschwenkten Position (17) der Schneidwerkzeuge erfolgt.

8. Strangpressverfahren nach Anspruch 7, **dadurch gekennzeichnet, dass** zur Einstellung der matrizenabhängigen Position (17') das untere Ende der Trennvorrichtung (10), an welchem sich die V-förmig zueinander angeordneten und in einer Schneidspitze (19) auslaufenden Schneidflächen (11) befinden, bis vor die Mündung der Matrize (20) abgesenkt wird, die Trennvorrichtung (10) um eine drehbare Lagerung (12) soweit in Richtung Matrize (20) geschwenkt wird, bis die Schneidspitze (19) die Frontseite (21) der Matrize (20) berührt und diese ausgeschwenkte, matrizenabhängige Position (17') der Schneidspitze (19) der Trennvorrichtung (10) wiederabrufbar gespeichert wird.

9. Strangpressverfahren nach Anspruch 8, **dadurch gekennzeichnet, dass** die matrizenabhängige Position (17') der Trennvorrichtung (10) über eine starr (13) mit dem Zylinder (14) der Trennvorrichtung (10) verbundenen Führung (18) auf mechanisch, hydraulisch oder elektronisch einstellbare Komponenten übertragen und mittels dieser Komponenten gespeichert wird.

10. Strangpressverfahren nach Anspruch 9, **dadurch gekennzeichnet, dass** gleichzeitig mit dem Verschwenken der Trennvorrichtung (10) durch die Führung (18) unmittelbar oder mittelbar ein Anschlag (15) in seiner Lage verschoben wird und durch Festlegung des Anschlages (15) in dieser Lage die matrizenabhängige Position (17') gespeichert wird.

11. Strangpressverfahren nach Anspruch 10, **dadurch gekennzeichnet, dass** nach Verschwenken der Trennvorrichtung (10) an die Führung (18) unmittelbar oder mittelbar ein Anschlag (15) zur Anlage gebracht wird und durch Festlegung des Anschlages (15) in dieser Lage die matrizenabhängige Position (17') gespeichert wird.

12. Strangpressverfahren nach Anspruch 10, **dadurch gekennzeichnet, dass** gleichzeitig oder nach Verschwenken der Trennvorrichtung (10) durch die Führung (18) unmittelbar oder mittelbar ein Differentialproportionalventil betätigt wird, welches ein von der matrizenabhängigen Position (17') der Schneidspitze (19) der Trennvorrichtung (10) entsprechendes Ausgangssignal an eine speicherprogrammierbare Steuerung weiterleitet, durch die dieses Signal und damit die Position (17') abrufbar abgespeichert wird.

13. Strangpressverfahren nach einem der Ansprüche 10 bis 12, **dadurch gekennzeichnet, dass** vor Ausführung jedes folgenden Trennschnitts die Trennvorrichtung (10) in die abgespeicherte matrizenabhängige Position (17') verschwenkt wird.

## Claims

1. A strand press, particularly for aluminium or aluminium alloys, with a separation device (10),
wherein the separation device (10) includes a pivotable cylinder (14), the lower end of which is furnished with two cutting surfaces (11) that are arranged in a V-shape with respect to each other, that contact each other at a cutting tip (19), and enclose between them an acute angle (γ) which is smaller than 45°, and
in the idle position the cylinder (14) is arranged above the orifice of a mould (20) or a recipient and is lowerable past the orifice for making a separating cut perpendicularly to the direction of the strand press (Rₑₓ),
**characterised in that**
a desired distance between the cutting tip (19) and the front side (21) of the mould (20) or the recipient is adjustable beforehand for a separating cut,
this preset clearance, which corresponds to a specified angle of incidence (β) of the cylinder (14) may be stored,
the cylinder (14) is pivotable in reproducible manner to this preset angle of incidence β for performing a separating cut, and is vertically lowerable at this preset angle of incidence β with a cutting force F,
and the cutting surfaces (11) of the separating device (10) are capable of being pivoted away before the vertical return stroke.

2. The strand press as cited in claim 1, **characterised in that** the angle (γ) is preferably 20°.

3. The strand press as cited in either of claims 1 or 2, **characterised in that** in order to achieve a separating cut that is flush with the front side (21) of the mould (20) when separating the strand remainder (30) from the mould (20), the distance between the cutting tip (19) and the front side (21) of the mould (20) is as small as possible.

4. The strand press as cited in any of claims 1 to 3, **characterised in that** in order to adjust the clearance of the cutting tip (19), the cylinder (14) is pivotable to a desired angle of incidence (β) about a rotating bearing (12) via a guidance means (18) that is rigidly (13) connected to the cylinder (14), wherein the angle of incidence (β) is the angle between the intended separating surface for cutting and the cutting surface (11) of the separating device (10) facing the separating surface for cutting.

5. The strand press as cited in claim 4, **characterised in that** the guidance means (18) that is connected rigidly (13) with the pivoting cylinder (14) is either directly or indirectly in cooperating connection with mechanical or hydraulic or electronic components, wherein these components are adjustable depending on the desired angle of incidence (β), and this setting may be called repeatedly subsequently when the desired angle of incidence (β) is required for the separating cut.

6. The strand press as cited in claim 5, **characterised in that** the cutting tip (19) is movable away from the front side (21) of the mould (20) for the return stroke of the separating device (10) after the separating cut, wherein the setting of the components is not changed.

7. A strand pressing process in which metal billets, particularly aluminium or aluminium alloy billets, are pressed one at a time through a mould (20) in several sequentially performed pressing steps to form a metal profile strand, and the end of the respective metal billet is separated from the mould (20) as the strand remainder (30) via a separating device (10) that exerts a cutting force (F) perpendicularly to the strand pressing direction (Rₑₓ) before the next pressing step begins with a subsequent metal billet,
**characterised in that**
a position (17') for the cutters of the separating device (10) referenced on the mould is set and then stored before the first pressing step or after a mould is replaced,
this position (17') is able to be moved to repeatedly before each separating step,
the vertical separating cut is made in this position (17'),
this position (17') is cleared by pivoting away of the cutters of the separating device (10) before the vertical return stroke of the separating device (10), and
the return stroke is performed with the cutters in any swivelled away position (17).

8. The strand pressing process as cited in claim 7, **characterised in that** in order to set the position (17') referenced on the mould, the lower end of the separating device (10), on which are located the cutting surfaces (11) that are arranged in a V-shape with respect to each other and end in a cutting tip (19), is lowered until it is opposite the orifice of the mould (20), the separating device (10) is swivelled towards the mould (20) about a pivotable bearing (12) until the cutting tip (19) contacts the front side (21) of the mould (20) and this swivelled, mould-referenced position (17') if the cutting tip (19) of the separating device (10) is stored so that it can be recalled.

9. The strand pressing process as cited in claim 8, **characterised in that** the position (17') of the separating device (10) referenced on the mould is transferred via a guidance means (18) that is connected rigidly (13) with the pivoting cylinder (14) of the separating device (10) to mechanically, hydraulically or electronically settable components, and is stored via these components.

10. The strand pressing process as cited in claim 9, **characterised in that** simultaneously with the swivelling of the separating device (10), the attitude of a stop (15) is moved directly or indirectly by guidance means (18) and mould-referenced position (17') is stored by determination of the stop (15) in this attitude.

11. The strand pressing process as cited in claim 10, **characterised in that** after the swivelling of the separating device (10), a stop (15) is moved to contact guidance means (18) directly or indirectly, and mould-referenced position (17') is stored by determination of the stop (15) in this attitude.

12. The strand pressing process as cited in claim 10, **characterised in that** simultaneously with or after the swivelling of the separating device (10), a differential proportional valve is actuated directly or indirectly by guidance means (18), which valve relays an output signal corresponding to a mould-referenced position (17') of the cutting tip (19) of the separating device (10) to a programmable logic controller, by which this signal and thus position (17') is stored so that it may be recalled.

13. The strand pressing process as cited in any of claims 10 to 12, **characterised in that** the separating device (10) is swivelled into the stored, mould-referenced position (17') before each subsequent separating cut is performed.

## Revendications

1. Presse à filer, notamment pour aluminium ou alliages d'aluminium, comportant un dispositif de séparation (10),
le dispositif de séparation (10) possédant un cylindre pivotable (14) qui présente, à son extrémité inférieure, deux surfaces de coupe (11) disposées en forme de V l'une par rapport à l'autre, qui se touchent au niveau d'une pointe de coupe (19) et qui circonscrivent entre elles un angle aigu (γ) inférieur à 45° et
le cylindre (14) étant, en position de repos, disposé au dessus de l'embouchure d'une matrice (20) ou d'un récipient, tout en pouvant, pour réaliser une coupe de séparation, être descendu perpendiculairement au sens de la presse à filer (Rₑₓ) devant l'embouchure,
**caractérisée en ce que**
on peut régler d'avance une distance souhaitée pour une coupe de séparation entre la pointe de coupe (19) et la face frontale (21) de la matrice (20) ou du récipient,
cette distance réglée, qui équivaut à un certain angle d'approche (β) du cylindre (14), peut être enregistrée en mémoire,
pour réaliser une coupe de séparation, le cylindre (14) est pivotable de manière reproductible dans cet angle d'approche (β) réglé d'avance et est déplaçable suivant cet angle d'approche (β) réglé d'avance avec une force de coupe (F) vers le bas dans le sens vertical et
que les surfaces de coupe (11) du dispositif de séparation (10) peuvent pivoter avant la course de retour verticale.

2. Presse à filer selon la revendication 1, **caractérisée en ce que** l'angle (γ) s'élève de préférence à 20°.

3. Presse à filer selon la revendication 1 ou 2, **caractérisée en ce que**, pour obtenir une coupe de séparation à fleur avec la surface frontale (21) de la matrice (20) lors de la séparation du résidu de presse (30) de la matrice (20), la distance entre la pointe de coupe (19) et la face frontale (21) de la matrice (20) est minimale.

4. Presse à filer selon au moins une des revendications 1 à 3, **caractérisée en ce que**, pour régler la distance de la pointe de coupe (19), le cylindre (14) est pivotable au moyen d'un guide (18) relié rigidement (13) au cylindre (14) autour d'un palier rotatif (12) jusqu'à un angle d'approche souhaité (β), l'angle d'approche (β) étant l'angle entre la surface de séparation visée et celui de la surface de coupe tournée vers la surface de coupe de séparation (11) du dispositif de séparation (10).

5. Presse à filer selon la revendication 4, **caractérisée en ce que** le guide (18) relié rigidement (13) au cylindre pivotable (14) est en liaison fonctionnelle directe ou indirecte avec des composants mécaniques ou hydrauliques ou électroniques, ces composants étant réglables en fonction de l'angle d'approche souhaité (β) et ce réglage étant consultable à répétition à un moment ultérieur lorsqu'on a besoin de l'angle d'approche souhaité (β) pour la coupe de séparation.

6. Presse à filer selon la revendication 5, **caractérisée en ce que**, pour la course de retour du dispositif de séparation (10), après la coupe de séparation, la pointe de coupe (19) peut être relevée de la face frontale (21) de la matrice (20), tandis que le réglage des composants ne change pas.

7. Procédé de filage par presse, dans lequel, en plusieurs étapes de presse se déroulant successivement, à chaque fois un goujon métallique, notamment un goujon en aluminium ou en alliage d'aluminium, est comprimé par une matrice (20) pour former une barre profilée métallique et l'extrémité du goujon métallique respectif est séparée de la matrice (20) en tant que résidu de presse (30) au moyen d'un dispositif de séparation (10) qui exerce une force de coupe (F) perpendiculairement au sens de la presse à filer (Rₑₓ) avant le début de l'étape de presse suivante avec un autre goujon métallique,
**caractérisé en ce que**,
avant la première étape de presse ou après un échange de matrice, une position (17') dépendante de la matrice des outils de coupe du dispositif de séparation (10) est réglée et ensuite enregistrée en mémoire,
qu'on avance à cette position (17') de manière reproductible avant chaque étape de séparation,
qu'on procède dans cette position (17') à la coupe de séparation verticale,
que cette position (17') est libérée avant la course de retour verticale du dispositif de séparation (10) par pivotement des outils de coupe du dispositif de séparation (10) de la matrice (20),
que la course de retour a lieu dans n'importe quelle position pivotée (17) des outils de coupe.

8. Procédé de filage par presse selon la revendication 7, **caractérisé en ce que**, pour régler la position (17') dépendante de la matrice, l'extrémité inférieure du dispositif de séparation (10) au niveau de laquelle se trouvent les surfaces de coupe (11) disposées en V les unes par rapport aux autres et se terminant en pointe de coupe (19) est descendue jusque devant l'embouchure de la matrice (20), que le dispositif de séparation (10) est pivoté autour d'un palier rotatif (12) en direction de la matrice (20) jusqu'à ce que la pointe de coupe (19) touche la face frontale (21) de la matrice (20) et que cette position pivotée (17') dépendante de la matrice de la pointe de coupe (19) du dispositif de séparation (10) est enregistrée en mémoire de manière à pouvoir la reconsulter.

9. Procédé de filage par presse selon la revendication 8, **caractérisé en ce que** la position dépendante de la matrice (17') du dispositif de séparation (10) est communiquée par un guide (18) relié rigidement (13) au cylindre (14) du dispositif de séparation (10) à des composants réglables au niveau mécanique, hydraulique ou électronique et enregistrée en mémoire au moyen de ces composants.

10. Procédé de filage par presse selon la revendication 9, **caractérisé en ce qu'**en même temps que le pivotement du dispositif de séparation (10), une butée (15) est déplacée directement ou indirectement par le guide (18) dans sa position et que la position dépendante de la matrice (17') est enregistrée en mémoire en fixant la butée (15) dans cette position.

11. Procédé de filage par presse selon la revendication 10, **caractérisé en ce qu'**après le pivotement du dispositif de séparation (10), une butée (15) est amenée directement ou indirectement en contact avec le guide (18) et que la position dépendante de la matrice (17') est enregistrée en mémoire en fixant la butée (15) dans cette position.

12. Procédé de filage par presse selon la revendication 10, **caractérisé en ce qu'**en même temps que ou après le pivotement du dispositif de séparation (10), une valve proportionnelle différentielle est actionnée directement ou indirectement par le guide (18), laquelle valve communique un signal de sortie correspondant à une position (17') dépendante de la matrice de la pointe de coupe (19) du dispositif de séparation (10) à une commande à mémoire programmable qui enregistre ce signal et donc la position (17') de manière à ce qu'on puisse la consulter.

13. Procédé de filage par presse selon une des revendications 10 à 12, **caractérisé en ce qu'**avant de réaliser chaque coupe de séparation suivante, le dispositif de séparation (10) pivote vers la position (17') dépendante de la matrice enregistrée en mémoire.
